# EUROPEAN PATENT SPECIFICATION

(11) **EP 3 814 798 B1**
(45) Date of publication and mention of the grant of the patent: **09.11.2022**
(21) Application number: 19749796.9
(22) Date of filing: 27.06.2019
(51) Int. Cl.: G01S 13/90

(54) **GROUND BASED SYNTHETIC APERTURE RADAR (GBSAR) WITH TRANSMITTING AND RECEIVING MULTIPLE ANTENNAS (MIMO) AND USING THE PROCESSING TECHNIQUE CALLED COMPRESSIVE SENSING (CS)**
BODENBASIERENDES RADAR MIT SYNTHETISCHER APERTUR (GBSAR) MIT MEHREREN SENDE- UND EMPFANGSANTENNEN (MIMO) UND VERWENDUNG DER ALS KOMPRESSIVE ERFASSUNG BEZEICHNETEN VERARBEITUNGSTECHNIK
RADAR À OUVERTURE SYNTHÉTIQUE BASÉ AU SOL (GBSAR) AVEC MULTIPLES ANTENNES DE TRANSMISSION ET DE RÉCEPTION (MIMO) ET UTILISATION DE LA TECHNIQUE DE TRAITEMENT APPELÉE DÉTECTION DE COMPRESSION (CS)

(30) Priority: 29.06.2018 IT 201800006797
(43) Date of publication of application: 05.05.2021
(73) Proprietor: Universita' Degli Studi di Firenze, 50121 Firenze (IT)
(72) Inventor: PIERACCINI, Massimiliano, 50124 Firenze (IT); MICCINESI, Lapo, 50141 Firenze (IT); ROJHANI, Neda, 50134 Firenze (IT)
(74) Representative: Nesti, Antonio
(86) International application number: PCT/IB2019/055448
(87) International publication number: WO 2020/003191

(56) References cited:
- RIAFENI KARLINA ET AL: "Compressive sensing applied to imaging by ground-based polarimetric SAR", GEOSCIENCE AND REMOTE SENSING SYMPOSIUM (IGARSS), 2011 IEEE INTERNATIONAL, IEEE, 24 July 2011 (2011-07-24), pages 2861-2864, XP032061550, DOI: 10.1109/IGARSS.2011.6049811 ISBN: 978-1-4577-1003-2 cited in the application
- ANDERS NELANDER: "Switched array concepts for 3-D radar imaging", RADAR CONFERENCE, 2010 IEEE, IEEE, PISCATAWAY, NJ, USA, 10 May 2010 (2010-05-10), pages 1019-1024, XP031696586, ISBN: 978-1-4244-5811-0

## Description

### Field of the Invention

The invention relates to a synthetic aperture radar and in particular a ground based radar employed for remote sensing of target displacements.

### Background art

The interferometric Ground Based Synthetic Aperture Radar (SAR) (GBSAR: Ground Based Synthetic Aperture Radar) have long been known and widely used for monitoring landslides and large structures such as reported in Tarchi D. at al. "Landslide monitoring by using ground based SAR interferometry: An example of application to the Tessina landslide" Engineering Geology, Vol. 68, no. 1-2, February 2003, pp. 15-30.

Such radars use a pair of antennas (respectively transmitting and receiving) which moves along a mechanical guide to acquire a radar image synthesizing a virtual opening equal to the scanning length.

Interferometric GBSAR systems based on a MIMO (Multiple Input Multiple Output) architecture are also known.

An example of such systems is reported in Tarchi D. et. al. "MIMO radar and ground based SAR imaging systems: equivalent approaches for remote sensing." IEEE Transactions on Geoscience and Remote Sensing, Vol. 51, no. 1, pp. 425-435, 2013. Such radar is based on a particular regular arrangement of the transmission and receiver antennas designed to minimize the side lobes (grating lobes).

It is also known a processing technique called Compressive Sensing "CS" (see for example Baraniuk, R. G. "Compressive sensing IEEE signal processing magazine, Vol. 24, no. 4, pp.118-121, 2007*) applied to data acquired by a conventional GBSAR as reported in* Zonno, M. "GBSAR data focusing based on compressive sensing." In EUSAR 2014; 10th European Conference on Synthetic Aperture Radar; Proceedings of (pp. 1-4). 2014*.*

The application of CS to GB-SAR systems is also described in Riafeni Karlina et al.: "Compressive Sensing applied to imaging by ground based polarimetric SAR" - Geoscience and Remote Sensing Symposium (IGARSS) - 2011 IEEE International, 24 July 2011 - pages 2861-2864*.*

The CS technique was also recently used in a MIMO GBSAR as described in M. Sato, "2-D and 3-D near range SAR imaging." in Antenna Measurements & Applications (CAMA), 2017 IEEE Conference on, pp. 157-160 *e in* W. Feng, L. Yi, M. Sato "Near range radar imaging by SFCW linear sparse array based on block sparsityʺ 2017 IEEE International Geoscience and Remote Sensing Symposium (IGARSS), 23-28 July 2017 DOl: 10.1109/IGARSS.2017.8128215*).* However, this system uses a conventional distribution of antennas and applies the CS technique in order to reduce the number of frequencies, not the number of antennas as in the invention subject of this patent.

<From ANDERS NELANDER: "Switched array concepts for 3-D radar imaging" 2010 IEEE RADAR CONFERENCE, 10 May 2010*,* it is described a MIMO system providing the use of a full static array of receiving antennas having a central transmitting and receiving antenna, in which are switched in such a way to simulate the movement of a SAR platform.>

### Object of the invention

A first object of the invention is to propose a MIMO GBSAR system with a reduced number of antennas, capable of overcoming the drawbacks of mechanical scanning GBSAR systems of the known type, speeding up the acquisition time of the images and the drawbacks of the current MIMO GBSAR which have strong side lobes due to the regular spacing of the antennas.

A second object is to propose a MIMO GBSAR system capable of measuring two different components of the displacement of a target in the radar field of view.

### Summary of the Invention

To these purposes according to the invention a system is proposed according to at least one of the appended claims, comprising a ground based synthetic aperture radar (GBSAR) with an irregular distribution of multiple transmitting and receiving directional antennas (MIMO) which uses an image processing technique comprising an algorithm of the CS (Compressive Sensing) type.

A first advantage of the invention with respect to known MIMO GBSAR systems is the reduction in the number of antennas with equal performances in terms of angular resolution and to allow to obtain images not affected by the problem of the side lobes (grating globes).

A second advantage with respect to the known MIMO GBSAR is that it is possible to use larger and therefore more directional antennas.

A second advantage is given by the fact that, in a particular configuration of the radar object of this invention it is possible to acquire two images of the same scenario taken from two different points of view and measure two different components of the possible displacement of the targets in the field of view.

### List of Drawings

These and other advantages will be better understood by a person skilled in the art from the description below and the accompanying drawings, wherein:
- figure1 schematically shows the radar object of the invention.
- figure 2 shows a radar according to the invention in which the TX antennas are arranged along a linear guide G1 and the RX antennas are arranged along a guide G2;
- figure 3 shows the arrangement of the acquisition points in the radar of fig.2;
- figure 4 shows a further configuration of a radar according to the invention.

### Detailed Description

With reference to the attached drawings, the transmission and reception unit U is connected by means of two switch systems (also called SPNT: Single Pole N- through) SW1 and SW2 respectively to N_{TX} transmitting antennas and N_{RX} receiving antennas. Similarly, each switch system can be replaced by SPDT pairs (SPNT: Single Pole Double through) arranged as a tree.

Similarly, the receiving switch system can be replaced by N_{RX} receivers operating in parallel.

Similarly, the transmitting switch system can be replaced by N_{TX} waveform division transmitters as is typical of many MIMO systems (see for example J.J.M. De Wit, et al. "Orthogonal waveforms for FMCW MIMO radar." In Radar Conference (RADAR), 2011 IEEE, pp. 686-691, 2011).

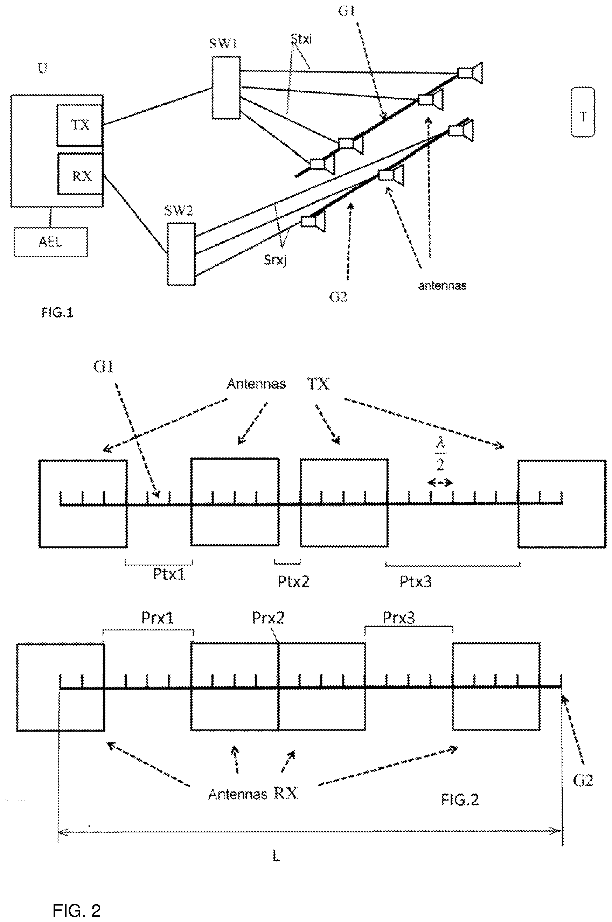

The radar object of this invention is based on a particular distribution of the transmitting (TX) and receiving (RX) antennas which are described below. With reference to figure 2, the TX antennas are arranged along a linear guide G1. The RX antennas are arranged along a second linear guide G2.

The two guides are parallel. Along the two guides antennas can be secured on positions regularly arranged with pitch p. In a preferred embodiment of the invention such pitch is equal to half of the radar wavelength (λ/2). A N_{TX} number of transmitting antennas are arranged with a random irregular distribution, in the relative guide G1. A number N_{RX} of receiving antennas are arranged with a random irregular distribution in the relative guide G2.

The acquisition takes place as follows:
A single TX antenna is turned on and is acquired (simultaneously or in succession) from all the RX antennas. This process is repeated for all the TX antennas, thus obtaining N_{TX} x N_{RX} signals or acquisition data Srxij.

For each of these Srxij data a virtual acquisition point PVAij can be associated at the median point between the centre of the TX antenna and the centre of the RX antenna.

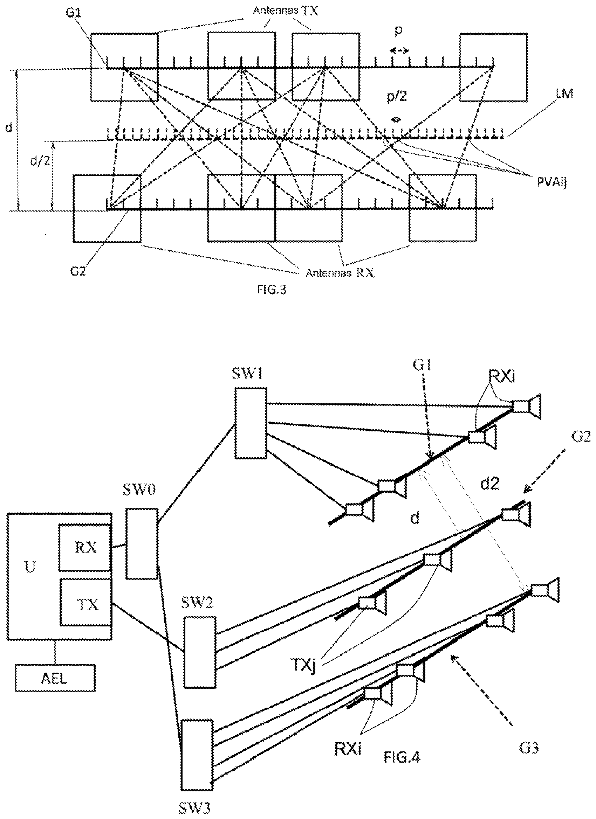

All these points will be on a line LM at the median distance between guide G1 and guide G2 (see figure 3).

Based on the position of these points on the median line, the so called psi array (ϕ) is constructed which will be used for CS processing. The construction of the psi array is performed as described below.

The number of columns K of the array is equal to the average length of the guides G1 and G2 divided by half of the pitch p. The number of rows M is arbitrarily chosen, but it is advisable to be equal to N_{TX} x N_{RX}.

All elements of all columns that do not correspond to a median point of a pair of TX and RX antennas are set to zero. The other elements of the array are filled with random numbers.

The array thus obtained is used to reconstruct (by means of the known technique CS) the values of the electric field acquired by K virtual antennas positioned along the median line between the G1 and G2 guide.

Acquisitions performed with K virtual antennas can be treated as the acquisitions of a conventional GBSAR moving along a line. Synthetic Aperture Radar (SAR) and radar interferometry known techniques can be applied to these data for the measurement of small displacements. In practice to measure the displacements (even millimetric) of a target in the field of view of the radar, two acquisitions are made in succession by transmitting and receiving from all antennas. The interferogram between the two obtained radar images is then calculated.

In a further configuration of the same radar (see figure 4) there are three parallel linear guides (G1, G2, G3), so it is possible to acquire two different interferograms.

The first interferogram is obtained using the antennas on G2 as transmitting and the antennas on G1 as receiving.

The second interferogram is obtained using the antennas on G2 as transmitting and the antennas on G3 as receiving. The two interferograms provide two different components of the possible displacement of the targets in the field of view.

The present invention has been described according to preferred embodiments; however, equivalent variants can be conceived without departing from the scope of the invention.

## Claims

1. Ground based synthetic aperture radar , GBSAR, apparatus comprising
a transmission and reception unit (U);
a number of directional transmitting antennas (Ntx) comprising at least three transmitting antennas (TXi) operatively connected with the unit (U) to transmit each one to a target (T) arranged in the radar field of view a radar transmission signal (Stxi) of determined wavelength (λ), the transmitting antennas (TXi) being arranged one after the other along a first linear guide (G1) with irregular spacings (Ptxi) of amplitude equal to different multiples of a pitch (p),
a number (Nrx) of directional receiving antennas (RXj) operatively connected with the unit (U) to receive each one a number (Ntx) of (λ) wavelength reception signals (Srxij) from the target (T) and corresponding to said transmission signals (Stxi) transmitted by said transmitting antennas (NTX),
said receiving antennas (RXj) being arranged one after the other along at least a second linear guide (G2) parallel at a given distance (d) with respect to said first guide (G1), with successive irregular spacings (Prxi) of amplitude equal to different multiples of said pitch (p);
an electronic acquisition and processing unit (AEL) operatively connected to said transmission and reception unit (U)to:
acquiring said reception signals (Srxij);
associating said reception signals (Srxij) with a virtual acquisition point (PVAij) arranged in a median position between the centre of the transmitting antenna (TXi) and the centre of the receiving antenna (RXj),
constructing an array (ϕ) of elements (ϕmk) based on the position of these points (PVAij) the array (ϕ) having a number (K) of columns (ϕk) and a number (M) of rows (ϕm),
wherein in said construction step of the array all the elements (ϕmk) of all the columns of (k) order not corresponding to the position on the median line (LM) of a virtual acquisition point (PVAij) are set equal to zero and the other elements of the array are filled with random numbers;
processing said elements of the array (ϕ) by means of a compressive sensing CS, algorithm applied to the array (ϕ) to reconstruct the values of the electric field acquired from a virtual array consisting of all the p/2 points along the line (LM);
processing said electric field values by means of Synthetic Aperture SAR, techniques to obtain at least one radar image of said target (T) corresponding to the acquisition of said reception signals (Srxij).

2. Apparatus according to claim 1, wherein said number of receiving antennas comprises further receiving antennas (RXj) arranged along a third linear guide (G3) parallel at a determined distance (d2) with respect to said first guide (G1), with irregular spacings (Prxi) of amplitude equal to different multiples of said pitch (p), wherein said one electronic acquisition and processing unit (AEL) is operatively connected to said transmission and reception unit (U) to make two successive acquisitions and acquire two different interferograms, the first using said transmitting antennas arranged on the guide (G1) and said receiving antennas arranged on the first guide (G2), the second using said transmitting antennas arranged on the (G1) guide and said receiving antennas arranged on the third (G3) guide so that the two interferograms provide two different components of the possible displacement of the targets (T) in the field of view.

3. Apparatus according to one of the preceding claims, wherein said first guide (G1) and said second guide (G2) are of equal length.

4. Apparatus according to claim 2 , wherein the third linear guide (G3) and said first guide (G1) and said second guide (G2) are of equal length.

5. Apparatus according to one of the preceding claims, wherein said number (K) of columns ((ϕk) is equal to the average length of the guides (G1) and (G2) divided by half the pitch (p).

6. Apparatus according to one of the preceding claims, wherein said number of rows (ϕₘ) is equal to the product N_{TX} x N_{RX}.

7. Apparatus according to one of the preceding claims, wherein said pitch (p) is equal to half the wavelength of the radar.

8. Apparatus according to one of the preceding claims, wherein the transmitting antennas are exchanged with the receiving antennas using the antennas on the second guide (G2) as transmitting and antennas on the first guide (G1) as receiving.

9. Apparatus according to one of the preceding claims, wherein said transmission and reception unit (U) is connected by switch systems (SWO, SW1, SW2, SW3) respectively to one or more transmitting antennas and to or more of the receiving antennas.

10. Apparatus according to one of claims 1-8, wherein said transmission and reception unit (U) is connected to pairs of switches of the SPDT type arranged as a tree to one or more transmitting antennas and/or to one or more receiving antennas.

11. Apparatus according to one of the previous claims, wherein said transmission and reception unit (U) is connected in parallel to one or more receiving antennas (RXj).

12. Apparatus according to one of the preceding claims, wherein said transmission and reception unit (U) is connected to one or more transmitting antennas (TXi) by waveform division transmitters.

## Patentansprüche

1. Bodenbasierendes Radar mit synthetischer Apertur, GBSAR, wobei die Vorrichtung umfasst:
eine Sende- und Empfangseinheit (U);
eine Anzahl von Senderichtantennen (Ntx), die mindestens drei Sendeantennen (TXi) umfassen, die operativ mit der Einheit (U) verbunden sind, damit jede einzelne ein Radarsendesignal (Stxi) von einer festgelegten Wellenlänge (λ) an ein Ziel (T), das in dem Radarsichtfeld angeordnet ist, übertragen kann, wobei die Sendeantennen (TXi) eine nach der anderen entlang einer ersten geradlinigen Führungsschiene (G1) in unregelmäßigen Abständen (Ptxi) einer Amplitude, die gleich verschiedenen Vielfachen eines Teilungsmaßes (p) sind, angeordnet sind,
eine Anzahl (Nrx) von Empfangsrichtantennen (RXj), die operativ mit der Einheit (U) verbunden sind, damit jede einzelne eine Anzahl (Ntx) von Empfangssignalen (Srxij) einer Wellenlänge (λ) von dem Ziel (T) und entsprechend den Sendesignalen (Stxi), die von den Sendeantennen (NTX) gesendet worden sind, empfangen kann,
wobei die Empfangsantennen (RXj) eine nach der anderen entlang mindestens einer zweiten geradlinigen Führungsschiene (G2), die parallel in einem gegebenen Abstand (d) in Bezug auf die erste Führungsschiene (G1) verläuft, mit aufeinander folgenden unregelmäßigen Abständen (Prxi) einer Amplitude, die gleich verschiedenen Vielfachen des Teilungsmaßes (p) sind, angeordnet sind;
eine elektronische Erfassungs- und Verarbeitungseinheit (AEL), die operativ mit der Sende- und Empfangseinheit (U) verbunden ist, um:
die Empfangssignale (Srxij) zu erfassen;
die Empfangssignale (Srxij) mit einem virtuellen Erfassungspunkt (PVAij), der in einer Medianposition zwischen dem Mittelpunkt der Sendeantennen (TXi) und dem Mittelpunkt der Empfangsantennen (RXj) angeordnet ist, zu verbinden,
ein Feld (ϕ) (array ϕ) von Elementen (ϕmk) auf der Basis der Position von diesen Punkten (PVAij) zu konstruieren, wobei das Feld (ϕ) eine Anzahl (K) von Spalten (ϕk) und eine Anzahl (M) von Zeilen (ϕₘ) aufweist,
wobei in dem Konstruktionsschritt des Feldes alle die Elemente (ϕmk) von all den Spalten der Ordnung (k), die nicht der Position auf der Medianlinie (LM) eines virtuellen Erfassungspunkts (PVAij) entsprechen, gleich Null gesetzt werden, und die anderen Elemente des Feldes mit Zufallszahlen aufgefüllt werden;
die Elemente des Feldes (ϕ) mittels eines Algorithmus der kompressiven Erfassung, CS, der auf das Feld (ϕ) angewandt wird, zu verarbeiten, um die Werte des elektrischen Feldes, das von einem virtuellen Feld, das aus all den p/2 Punkten entlang der Linie (LM) besteht, erfasst wird, zu rekonstruieren;
die Werte des elektrischen Feldes mittels der Technik der synthetischen Apertur, SAR, zu verarbeiten, um mindestens eine Radarabbildung des Ziels (T) zu erhalten, die der Erfassung der Empfangssignale (Srxij) entspricht.

2. Vorrichtung nach Anspruch 1, wobei die Anzahl der Empfangsantennen ferner Empfangsantennen (RXj) umfasst, die entlang einer dritten geradlinigen Führungsschiene (G3), die parallel in einem bestimmten Abstand (d2) in Bezug auf die erste Führungsschiene (G1) verläuft, in unregelmäßigen Abständen (Prxi) einer Amplitude, die gleich verschiedenen Vielfachen des Teilungsmaßes (p) sind, angeordnet sind, wobei die eine elektronische Erfassungs- und Verarbeitungseinheit (AEL) operativ mit der Sende- und Empfangseinheit (U) verbunden ist, um zwei aufeinander folgende Erfassungen durchzuführen und um zwei verschiedene Interferogramme zu erfassen, wobei das erste die Sendeantennen, die auf der ersten Führungsschiene (G1) angeordnet sind, und die Empfangsantennen, die auf der ersten Führungsschiene (G2) angeordnet sind, verwendet, und wobei das zweite die Sendeantennen, die auf der ersten Führungsschiene (G1) angeordnet sind, und die Empfangsantennen, die auf der dritten Führungsschiene (G3) angeordnet sind, verwendet, so dass die zwei Interferogramme zwei verschiedene Komponenten der möglichen Verschiebung der Ziele (T) in dem Sichtfeld liefern.

3. Vorrichtung nach einem der vorhergehenden Ansprüche, wobei die erste Führungsschiene (G1) und die zweite Führungsschiene (G2) von gleicher Länge sind.

4. Vorrichtung nach Anspruch 2, wobei die dritte geradlinige Führungsschiene (G3) und die erste Führungsschiene (G1) und die zweite Führungsschiene (G2) von gleicher Länge sind.

5. Vorrichtung nach einem der vorhergehenden Ansprüche, wobei die Anzahl (K) von Spalten (ϕk) gleich der Durchschnittslänge der Führungsschienen (G1) und (G2) dividiert durch das halbe Teilungsmaß (p) ist.

6. Vorrichtung nach einem der vorhergehenden Ansprüche, wobei die Anzahl von Zeilen ((ϕₘ) gleich dem Produkt aus N_{TX} × N_{RX} ist.

7. Vorrichtung nach einem der vorhergehenden Ansprüche, wobei das Teilungsmaß (p) gleich der halben Wellenlänge des Radars ist.

8. Vorrichtung nach einem der vorhergehenden Ansprüche, wobei die Sendeantennen mit den Empfangsantennen ausgetauscht werden, indem die Antennen auf der zweiten Führungsschiene (G2) zum Senden und Antennen auf der ersten Führungsschiene (G1) zum Empfangen verwendet werden.

9. Vorrichtung nach einem der vorhergehenden Ansprüche, wobei die Sende- und Empfangseinheit (U) durch Schaltersysteme (SWO, SW1, SW2, SW3) jeweils mit einer oder mit mehreren Sendeantennen und mit einer oder mit mehreren Empfangsantennen verbunden ist.

10. Vorrichtung nach einem der Ansprüche 1 bis 8, wobei die Sende- und Empfangseinheit (U) mit Paaren von Schaltern vom SPDT-Typ, die als ein Baum mit einer oder mit mehreren Sendeantennen und/oder mit einer oder mit mehreren Empfangsantennen angeordnet sind, verbunden ist.

11. Vorrichtung nach einem der vorhergehenden Ansprüche, wobei die Sende- und Empfangseinheit (U) parallel mit einer oder mit mehreren Empfangsantennen (RXj) verbunden ist.

12. Vorrichtung nach einem der vorhergehenden Ansprüche, wobei die Sende- und Empfangseinheit (U) mit einer oder mit mehreren Sendeantennen (TXi) durch Sender zur Wellenformaufteilung verbunden ist.

## Revendications

1. Appareil de radar à ouverture synthétique basé au sol, GBSAR, comprenant
une unité de transmission et de réception (U) ;
un nombre d'antennes de transmission directionnelles (Ntx) comprenant au moins trois antennes de transmission (TXi) reliées opérationnellement à l'unité (U) pour chacune transmettre, à une cible (T) agencée dans le champ de vision de radar, un signal de transmission de radar (Stxi) d'une longueur d'onde (λ) déterminée, les antennes de transmission (TXi) étant agencées l'une après l'autre le long d'un premier guide linéaire (G1) avec des espacements irréguliers (Ptxi) d'amplitude égale à différents multiples d'un pas (p),
un nombre (Nrx) d'antennes de réception directionnelles (RXj) reliées opérationnellement à l'unité (U) pour chacune recevoir un nombre (Ntx) de signaux de réception (Srxij) de longueur d'onde (λ) depuis la cible (T) et correspondant auxdits signaux de transmission (Stxi) transmis par lesdites antennes de transmission (NTX),
lesdites antennes de réception (RXj) étant agencées l'une après l'autre le long d'au moins un deuxième guide linéaire (G2) parallèle audit premier guide (G1) à une distance (d) donnée de celui-ci, avec des espacements (Prxi) irréguliers successifs d'amplitude égale à différents multiples dudit pas (p) ;
une unité d'acquisition et de traitement électronique (AEL) reliée opérationnellement à ladite unité de transmission et de réception (U) pour :
acquérir lesdits signaux de réception (Srxij) ;
associer lesdits signaux de réception (Srxij) à un point d'acquisition virtuel (PVAij) agencé à une position médiane entre le centre de l'antenne de transmission (TXi) et le centre de l'antenne de réception (RXj),
construire un réseau (ϕ) d'éléments (ϕmk) sur la base de la position de ces points (PVAij), le réseau (ϕ) comportant un nombre (K) de colonnes (ϕk) et un nombre (M) de rangées (ϕm),
dans lequel, à ladite étape de construction du réseau, tous les éléments (ϕmk) de toutes les colonnes d'ordre (k) ne correspondant pas à la position sur la ligne médiane (LM) d'un point d'acquisition virtuel (PVAij) sont réglés égaux à zéro et les autres éléments du réseau sont remplis de nombres aléatoires ;
traiter lesdits éléments du réseau (ϕ) au moyen d'un algorithme de détection de compression, CS, appliqué au réseau (ϕ) pour reconstruire les valeurs du champ électrique acquises depuis un réseau virtuel se composant de tous les p/2 points le long de la ligne (LM) ;
traiter lesdites valeurs de champ électrique au moyen de techniques d'ouverture synthétique, SAR, pour obtenir au moins une image radar de ladite cible (T) correspondant à l'acquisition desdits signaux de réception (Srxij).

2. Appareil selon la revendication 1, dans lequel ledit nombre d'antennes de réception comprend d'autres antennes de réception (RXj) agencées le long d'un troisième guide linéaire (G3) parallèle audit premier guide (G1) à une distance (d2) déterminée de celui-ci, avec des espacements (Prxi) irréguliers d'amplitude égale à différents multiples dudit pas (p), dans lequel ladite unité d'acquisition et de traitement électronique (AEL) est reliée opérationnellement à ladite unité de transmission et de réception (U) pour réaliser deux acquisitions successives et acquérir deux interférogrammes différents, le premier en utilisant lesdites antennes de transmission agencées sur le guide (G1) et lesdites antennes de réception agencées sur le premier guide (G2), le deuxième en utilisant lesdites antennes de transmission agencées sur le guide (G1) et lesdites antennes de réception agencées sur le troisième guide (G3) de sorte que les deux interférogrammes fournissent deux composants différents du déplacement possible des cibles (T) dans le champ de vision.

3. Appareil selon l'une des revendications précédentes, dans lequel ledit premier guide (G1) et ledit deuxième guide (G2) sont de longueur égale.

4. Appareil selon la revendication 2, dans lequel le troisième guide linéaire (G3) et ledit premier guide (G1) et ledit deuxième guide (G2) sont de longueur égale.

5. Appareil selon l'une des revendications précédentes, dans lequel ledit nombre (K) de colonnes (ϕk) est égal à la longueur moyenne des guides (G1) et (G2) divisée par la moitié du pas (p).

6. Appareil selon l'une des revendications précédentes, dans lequel ledit nombre de rangées (ϕₘ) est égal au produit N_{TX} x N_{RX}.

7. Appareil selon l'une des revendications précédentes, dans lequel ledit pas (p) est égal à la moitié de la longueur d'onde du radar.

8. Appareil selon l'une des revendications précédentes, dans lequel les antennes de transmission sont échangées avec les antennes de réception en utilisant les antennes sur le deuxième guide (G2) pour la transmission et les antennes sur le premier guide (G1) pour la réception.

9. Appareil selon l'une des revendications précédentes, dans lequel ladite unité de transmission et de réception (U) est reliée par des systèmes de commutation (SWO, SW1, SW2, SW3) respectivement à une ou plusieurs antennes de transmission et à une ou plusieurs des antennes de réception.

10. Appareil selon l'une des revendications 1 à 8, dans lequel ladite unité de transmission et de réception (U) est reliée à des paires de commutateurs du type SPDT agencés sous forme d'une arborescence à une ou plusieurs antennes de transmission et/ou à une ou plusieurs antennes de réception.

11. Appareil selon l'une des revendications précédentes, dans lequel ladite unité de transmission et de réception (U) est reliée en parallèle à une ou plusieurs antennes de réception (RXj).

12. Appareil selon l'une des revendications précédentes, dans lequel ladite unité de transmission et de réception (U) est reliée à une ou plusieurs antennes de transmission (TXi) par des émetteurs à répartition de forme d'onde.
